# EUROPÄISCHE PATENTSCHRIFT

(11) **EP 2 773 864 B1**
(45) Veröffentlichungstag und Bekanntmachung des Hinweises auf die Patenterteilung: **23.08.2017**
(21) Anmeldenummer: 12778308.2
(22) Anmeldetag: 22.10.2012
(51) Int. Cl.: F03B 3/12, F03B 11/00, F03B 13/26, F16B 2/00, F16D 1/033

(54) **REIBSCHEIBENKOMPONENTE, ANORDNUNG UND UNTERWASSERKRAFTWERK**
FRICTION DISC COMPONENT, ARRANGEMENT AND SUBMERGED POWER PLANT
ÉLÉMENT DE DISQUE DE FRICTION, AGENCEMENT ET CENTRALE ÉLECTRIQUE SOUS-MARINE

(30) Priorität: 02.11.2011 DE 102011085612
(43) Veröffentlichungstag der Anmeldung: 10.09.2014
(73) Patentinhaber: Aktiebolaget SKF, 415 50 Göteborg (SE)
(72) Erfinder: MENIG, Fred, 97717 Sulzthal (DE); GOETZ, Johannes, 97520 Röthlein (DE)
(74) Vertreter: Kuhstrebe, Jochen
(86) Internationale Anmeldenummer: PCT/EP2012/070836
(87) Internationale Veröffentlichungsnummer: WO 2013/064385

(56) Entgegenhaltungen:
- EP-A1- 2 273 142
- WO-A1-93/19312
- DE-A1- 19 507 854
- DE-A1-102007 014 861
- US-A1- 2010 240 463

## Beschreibung

Die vorliegende Erfindung liegt auf dem Gebiet der Unterwasserkraftwerke, insbesondere der Verbindung und Abdichtung von Antriebswellen in Unterwasserkraftwerken.

Aus dem Bereich der konventionellen Technik sind Unterwasserkraftwerke bereits bekannt. Im Folgenden werden bekannte Lagerungskonzepte für Unterwasserkraftwerke kurz zusammengefasst. Die Druckschrift DE102009005556A1 offenbart ein Konzept zur Spülung von Unterwasserkraftwerken, bei denen bewusst auf eine Kapselung der eingesetzten Lager verzichtet wird. Bei derartigen Konstruktionen ist der Bereich, der in direktem Kontakt mit dem Umgebungswasser steht, gegen einen übermäßigen Sedimenteinfall zu schützen. Des Weiteren muss der Bewuchs in diesem Bereich begrenzt werden. Eine der diesbezüglichen Maßnahmen besteht darin, den gefluteten Bereich und insbesondere die Lager sowie die diesen zugeordneten Komponenten, wie Dichtungselemente und dergleichen, zu spülen.

Ein Konzept sieht vor, an einem Unterwasserkraftwerk mindestens einen Spülanschluss anzulegen, durch den der Anlage von außen ein Spülmedium zugeleitet werden kann. Demnach liegt in der Anlage selbst zwischen dem externen Spülanschluss und dem zu spülenden Bereich kein Fördersystem, wie eine Pumpe oder dergleichen, für das Spülmedium vor. Des Weiteren wird auf ein zusätzliches Filtersystem verzichtet. Stattdessen wird am externen Spülanschluss das Spülmedium mit einem solchen Überdruck zugeführt, dass eine hinreichend starke Durchströmung des zu spülenden Bereichs und eine Abströmung zum Außenbereich erfolgt, wodurch Sedimente und, bevorzugt ein ursprünglich vorliegender Bewuchs, nach außen transportiert werden.

Ein Konzept zur optimierten Leistungsregelung und Steuerung von Unterwasserkraftwerken ist in der Druckschrift DE102008053732B3 offenbart. Die Druckschrift DE102008031615A1 zeigt eine als Ganzes handhabbare und als Einheit montierbare Generator-Baueinheit, die von der eigentlichen Antriebswelle eines Unterwasserkraftwerks getrennt transportiert und montiert werden kann. Diese umfasst mit einem Generatorläufer und einem Generatorstator die Grundkomponenten eines elektrischen Generators. Zusätzlich ist ein Generatorgehäuse Teil der Generator-Baueinheit. Die Steuerungs- und Leistungskomponenten des elektrischen Generators können zusätzlich in die Generator-Baueinheit aufgenommen werden.

Die Druckschrift DE102008061912A1 beschäftigt sich mit Lagerkissen, beispielsweise für seewassertaugliche Gleitlager. Für einen sich hydrodynamisch aufbauenden Schmierfilm und der damit verbundenen parabolischen Druckentwicklung für weiche beziehungsweise elastische Gleitbeläge tritt eine konkave Einfederung im zentralen Bereich auf. Diese führt zu einer Lagerspalterweiterung und einem Einbruch der Druckverteilung im mittleren Bereich der Gleitfläche. Dem wird dadurch entgegengewirkt, dass die Materialstärke des Gleitbelags in Richtung der Flächennormalen der Gleitfläche an den beim Betrieb auftretenden Schmierfilmdruck angepasst wird. In den Bereichen hohen Drucks, welche um das Flächenzentrum der Gleitfläche liegen, wird eine verringerte Materialstärke verwendet, während die Randbereiche eine hohe Materialstärke aufweisen. Dabei bleibt das Profil der Gleitfläche erhalten, das typischerweise jenem der Gegenlauffläche entspricht. Die Anpassung der Materialstärke des Gleitbelags erfolgt durch eine entsprechende Profilierung der Auflagefläche am Grundkörper, die der Rückseite des Gleitbelags gegenüberliegt. Im einfachsten Fall wird ein erhabener Sockel im Zentralbereich der Auflagefläche des Grundkörpers vorgesehen. Eine genauere Anpassung kann durch einen mehrfach gestuften oder konvexen Verlauf der Auflagefläche bewirkt werden.

Die Druckschrift DE102008006899A1 offenbart ein Konzept zur Lagerung einer Antriebswelle eines Unterwasserkraftwerks. Hier wird eine Lageranordnung zur Lagerung einer Welle bereitgestellt, wobei die Lageranordnung wenigstens ein Radialgleitlager und wenigstens ein Axialgleitlager aufweist und wobei die Lageranordnung durch von außen eindringendes Wasser schmierbar ist.

Die Druckschrift EP 2 273 142 A1 beschäftigt sich mit einer Wellenkupplung einer Wasserkraftanlage.

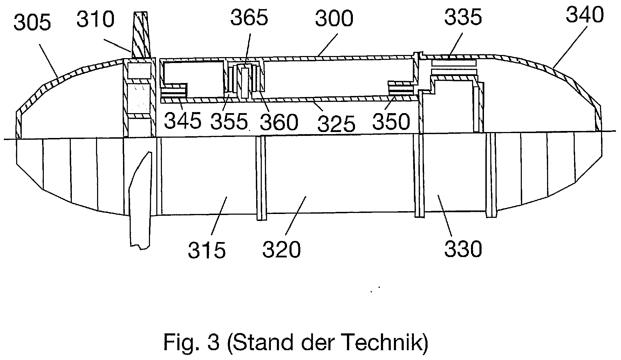

Die Figur 3 zeigt einen schematischen Aufbau eines Unterwasserkraftwerks. Die Figur 3 illustriert eine Maschinengondel 300 mit einem segmentierten Aufbau. An die Maschinengondel 300 schließen sich im vorderen Bereich eine Haube 305 und eine propellerförmige Wasserturbine 310 an. Die Maschinengondel 300 umfasst zwei Segmente 315 und 320, die die Antriebswelle 325 enthalten. In einem weiteren Segment 330 befindet sich ein Generator 335, der mit der Antriebswelle 325 gekoppelt ist. Eine weitere Haube 340 schließt das Unterwasserkraftwerk nach dem Generator 335 ab.

Die Haube 305 bildet mit der Wasserturbine 310 eine umlaufende Einheit, die mit der Antriebswelle 325 gekoppelt ist. Zur Lagerung der Antriebswelle 325 sind mehrere Gleitlager vorgesehen. Im der Wasserturbine 310 zugewandten vorderen Bereich der Antriebswelle 325 befindet sich ein Radialgleitlager 345. Im dem Generator 335 zugewandten hinteren Bereich der Antriebswelle 325 befindet sich ein weiteres Radialgleitlager 350. Axiale Kräfte der Antriebswelle werden durch die beiden Axialgleitlager 355 und 360 aufgenommen, die eine mit der Antriebswelle 325 verbundene Spurscheibe 365 axial abstützen.

Die Gleitlager 345, 350, 355 und 360 können dabei seewasserfest ausgeführt sein, insbesondere wassergeschmiert. Damit ist es möglich den gesamten Innenbereich der Maschinengondel 300 zu fluten und auf aufwändige Abdichtungen, insbesondere der Lager, zu verzichten.

Die zum Einsatz kommenden Gleitlager 345, 350, 355 und 360 werden teilweise direkt auf der Antriebswelle 325 realisiert. Zur Realisierung der Radialgleitlager 345, 350 werden an den beiden jeweiligen Enden der Welle 325 über eine Breite von ca. 100 - 4000 mm sehr harte Beschichtungen aufgetragen, die dann jeweils den Innenring für eines der Radialgleitlager 345, 350 darstellen. Als Beschichtungsverfahren kann z.B. das Hochgeschwindigkeits-Flammspritzen (auch HVOF, abgeleitet von High-Velocity-Oxygen-Fuel) oder ein anderes thermisches Beschichtungsverfahren zur Oberflächenbehandlung verwendet werden. Darüber hinaus kann an diesen Stellen zunächst ein Stahlring durch Schweißen aufgebracht werden und auf dessen Oberfläche die Beschichtung erfolgen. Das Lager läuft dabei direkt im Wasser bzw. Seewasser.

Bei der konventionellen Vorgehensweise werden Abschnitte der Antriebswelle 325 mit einer Beschichtung versehen, bzw. erfolgt zunächst eine Befestigung von Lagerringen auf den jeweiligen Wellenenden durch Schweißen und anschließend eine Beschichtung dieser Ringe. Darüber hinaus müssen die beschichteten Stellen nachbearbeitet werden, z.B. durch Schleifen. Ein Austausch der Lager bei einem Schaden ist nicht direkt möglich, so dass im Schadenfall die komplette Welle repariert bzw. ausgetauscht werden muss.

Nachteilig an den konventionellen Konzepten ist die Notwendigkeit, eine große einteilige Welle handhaben zu müssen. Die Länge einer solchen Antriebswelle kann mehrere Meter betragen, wobei der Durchmesser ebenfalls über einem Meter liegen kann. Typische Werte sind 0,1 - 15 m Länge bei einem Durchmesser von 30 mm - 6000 mm und dies bei einer Leistung um 0,5 kW - 15 MW. Darüber hinaus kann sich das Gewicht einer solchen Antriebswelle leicht auf mehrere Tonnen belaufen, ein typisches Gewicht wäre 0,01 - 100t.

Ein Problem besteht nun darin, dass eine sehr große und schwere Antriebswelle 325 gehandhabt, transportiert, auf eine Maschine aufgespannt, ggf. beschichtet werden muss. Dies ist sehr kostenintensiv. Neben der oben beschriebenen Handhabung bei der Montage und der Lagerwartung stellt bei solch großen Wellen die Handhabung generell ein Problem dar. Insbesondere unter Wasser, wo eine solche Welle meist angeseilt bewegt wird, stellt das Bewegen und Ausrichten eine große Herausforderung dar. Nicht zuletzt das hohe Gewicht dieser Wellen bringt für die verwendeten Lager eine hohe Belastung mit sich.

Darüber hinaus sind die zwischen den Komponenten wirkenden Drehmomente sehr groß, wie z. B. zwischen Antriebswelle, Lager, Rotor, Stator, Generator, Turbine, etc. Zwischen diesen Komponenten können beispielsweise Flansche eingesetzt werden, die entsprechend den Drehmomenten ausgelegt sind. Ferner müssen die Befestigungsmöglichkeiten zwischen den einzelnen Komponenten oder deren Flansche entsprechend angepasst werden, um die jeweiligen Drehmomente zu übertragen. Einige der Komponenten können dabei als Hohlbauteile ausgeführt sein, z.B. können Hohlwellen als Antriebswellen bei Unterwasserkraftwerken eingesetzt werden. Um die Belastung der Lager zu reduzieren, können diese mit Luft oder einem Gas gefüllt werden. Der daraus resultierende Auftrieb kann die Belastung der Lager verringern. Insbesondere mit Luft oder Gas gefüllte Hohlwellen erfordern jedoch, dass die Flansche abgedichtet sind, um ein Eindringen von Wasser in die Hohlwelle bzw. ein Entweichen des Gases aus der Hohlwelle zu vermeiden. Flansche sollten daher dicht sein, um ein Eindringen von Wasser in die Hohlwelle bzw. ein Entweichen des Gases aus der Hohlwelle zu vermeiden. Eine Abdichtung erfolgt dabei beispielsweise durch Schweißen.

Es ist daher die Aufgabe der vorliegenden Erfindung, ein verbessertes Konzept zur Montage von Komponenten für ein Unterwasserkraftwerk zu schaffen.

Die Aufgabe wird durch eine Reibscheibenkomponente, eine Anordnung und ein Unterwasserkraftwerk gemäß den unabhängigen Ansprüchen gelöst.

Ausführungsbeispiele beruhen beispielsweise auf der Erkenntnis, dass die wirkenden Drehmomente bei einem Unterwasserkraftwerk sehr groß sind. Flansche, die zur mechanischen Kopplung von Lagern und Wellen verwendet werden, müssen dementsprechend dimensioniert werden und entsprechende Befestigungsmöglichkeiten aufweisen. Ausführungsbeispiele beruhen auf der Erkenntnis, dass eine Reibscheibe zwischen den Komponenten eines Unterwasserkraftwerks eingesetzt werden kann, um die Reibung und damit den Kraftschluss zwischen den Komponenten zu erhöhen. Es ist daher ein Kerngedanke der vorliegenden Erfindung, Montageaufwand durch Einsatz solcher Reibscheiben einzusparen.

In Ausführungsbeispielen sind an den Reibscheiben Reibbeschichtungen vorgesehen, um eine Reibkraft zwischen den Bauteilen oder Bauelementen zu erhöhen. So kann zum einen auf eine Verschweißung verzichtet werden und, aufgrund der Reibkraft zwischen den Bauteilen, kann des Weiteren auf Montagemittel, wie Bohrungen, Bolzen, Schrauben, etc. verzichtet werden. Der Vorteil der Verringerung der Montagemittel kann jedoch einen Nachteil der erschwerten Abdichtung mit sich bringen. Diesen Nachteil können Ausführungsbeispiele durch dafür vorgesehene Ausnehmungen an der Reibscheibe beheben, da die Ausnehmungen eine Verwendung von Dichtungen erlauben, die wiederum eine Abdichtung der Bauteile untereinander ermöglichen.

Ausführungsbeispiele beruhen ferner auf der Erkenntnis, dass entgegen dem konventionellen Abdichten durch Schweißen und einem entsprechend großen Dimensionieren der Flansche, Dichtungen vorgesehen werden können. Diese können insbesondere dann eine gute Dichtwirkung erzielen, wenn diese an den Reibscheiben, wie z.B. zwischen Lagern, Wellen und Flanschen, in dafür vorgesehenen Ausnehmungen oder Nuten vorgesehen sind.

Hier und im Folgenden werden unter den Begriffen Bauteil oder Bauelement z.B. Komponenten eines Unterwasserkraftwerks verstanden, d.h. Lagerringsegmente, Lagerringe, Lager, Wellen, an diesen vorgesehene Flansche, etc.

Ausführungsbeispiele umfassen eine Reibscheibenkomponente, die eine Befestigungsmöglichkeit zur Verbindung zweier Bauelemente umfasst. Die Reibscheibenkomponente weist eine Beschichtung auf, die eine Reibkraft zwischen der Reibscheibenkomponente und zumindest einem der Bauelemente erhöht, und umfasst ferner eine Ausnehmung für eine Dichtung, derart dass die Reibscheibenkomponente mit zumindest einem der Bauelemente wasserdicht verbindbar ist. Hier und im Folgenden wird unter der Reibscheibenkomponente ein Teil einer Reibscheibe oder eine ganze Reibscheibe verstanden. Die Reibscheibenkomponente kann als Reibscheibensegment, Reibscheibenringsegment, Reibscheibe, oder Reibscheibenring ausgebildet sein.

Ausführungsbeispiele umfassen auch eine Anordnung aus einer Antriebswelle für ein Unterwasserkraftwerk, einer Reibscheibenkomponente der obigen Beschreibung und einem mit der Antriebswelle über die Reibscheibenkomponente verbundenen Bauelement. Darüber hinaus können Ausführungsbeispiele auch ein Unterwasserkraftwerk schaffen, das eine solche Anordnung umfasst. Dabei kann die wasserdichte Verbindung beispielsweise verhindern, dass beim Einsatz unter Wasser, Wasser in das Innere einer Hohlwelle gelangt. In einigen Ausführungsbeispielen kann auch vorgesehen sein, dass das abgedichtete Innere einer Konstruktion oder Anordnung aus beispielsweise einem Lager, der Reibscheibenkomponente und einer Welle unter Druck steht, d.h. beispielsweise unter Druck mit Gas oder Luft befüllt wird. Dieser Druck kann dann dem Druck des Wassers entgegenwirken. In anderen Ausführungsbeispielen kann die Konstruktion im Innern auch ein Vakuum aufweisen, beispielsweise um den Auftrieb weiter zu erhöhen.

In Ausführungsbeispielen kann die Reibscheibenkomponente mit dem Bauelement gas- oder luftdicht verbindbar sein. Die Reibscheibenkomponente kann derart ausführt sein, dass sie auch selbst als Abdichtung der Hohlwelle oder eines Lagerrings dienen kann. In diesen Ausführungsbeispielen kann die Reibscheibenkomponente z.B. als Scheibe ausgeführt sein, so dass diese eine Abdeckung für den abzudichtenden Hohlraum bilden kann, beispielsweise wie ein Deckel für eine Hohlwelle, einen Lagerring, etc. In Ausführungsbeispielen kann die Reibscheibenkomponente zur Befestigung einer Antriebswelle eines Unterwasserkraftwerks an eine weitere Antriebswelle, eine Lagerkomponente, eine Rotorwelle, oder eine Generatorwelle angepasst sein. Die Ausnehmung für die Dichtung kann dann angepasst sein, um bei Befestigung an einer Hohlwelle als Antriebswelle, den Hohlraum der Antriebswelle abzudichten.

Die Reibscheibenkomponente kann in Ausführungsbeispielen eine weitere Ausnehmung für eine weitere Dichtung aufweisen. Die Reibscheibenkomponente kann dann mit beiden Bauelementen wasserdicht verbindbar sein. Ebenso kann die Reibscheibenkomponente beidseitig beschichtet sein. Die Ausnehmung und die weitere Ausnehmung können sich an axial gegenüberliegenden Seiten der Reibscheibenkomponente befinden. Die Reibscheibenkomponente kann Beschichtungen an zwei sich axial gegenüberliegenden Seiten aufweisen. Beispielsweise kann die Reibscheibenkomponente zwischen zwei Hohlwellenabschnitten eingeklemmt werden und so zum einen die Reibung gegenüber diesen Hohlwellenabschnitten jeweils erhöhen und zusätzlich mit den beiden Hohlwellenabschnitten dicht abschließen, so dass die beiden Hohlräume dicht miteinander verbunden sind.

In weiteren Ausführungsbeispielen kann die Reibscheibenkomponente als Reibscheibensegment ausgeführt sein. Das Reibscheibensegment kann an zumindest einer Seite eine zusätzliche Ausnehmung zur Aufnahme einer Dichtung zur Abdichtung des Reibscheibensegments gegenüber einem weiteren Reibscheibensegment aufweisen. Unter einem Reibscheibensegment wird im Folgenden ein Teil einer Reibscheibe oder eine Reibscheibensegments verstanden. Das Reibscheibensegment kann demnach beispielsweise einen gewissen Winkelbereich eines Reibscheibenrings oder einer Reibscheibe umfassen, d.h. in Ausführungsbeispielen können mehrere gleiche oder auch ungleiche Reibscheibensegmente einen Reibscheibenring oder eine Reibscheibe bilden. Ausführungsbeispiele von Reibscheibensegmenten sind nicht auf eine bestimmte Unterteilung eines Reibscheibenrings oder einer Reibscheibe in Segmente beschränkt, es sind beliebige axiale und auch radiale Segmentierungen denkbar.

Darüber hinaus können Ausführungsbeispiele vorsehen, die notwendigen Befestigungsmittel, wie z.B. Schrauben oder Bolzen, die zur Befestigung der Reibscheibenkomponente an dem Bauteil oder Bauelement verwendet werden, möglichst aufwandgünstig zu halten, d.h. beispielsweise mit möglichst wenig Schrauben auszukommen. Dies kann dadurch erreicht werden, dass die Beschichtung an der Reibscheibenkomponente eine Reibkraft zwischen der Reibscheibenkomponente und dem Bauteil erhöht. Durch die erhöhte Reibkraft können Befestigungsmittel, wie z.B. Schrauben oder Bolzen, eingespart werden. Dies reduziert den Wartungs- und Montageaufwand, da die entsprechenden Teile somit schneller montiert und demontiert werden können. Dabei braucht durch die oben beschriebenen Abdichtungsmaßnahmen nicht auf eine Verwendung von Luft oder Gas gefüllten Hohlwellen, bzw. auf unter Vakuum stehende Bauteile, verzichtet zu werden. Die Ausnehmung kann dabei von der Beschichtung umgeben sein, d.h. an die Beschichtung grenzen. In anderen Worten kann die Beschichtung von der Ausnehmung unterbrochen werden, sodass gegenüber dem Bauelement zwei Flächen zur Kraftkopplung entstehen, zwischen denen sich eine Dichtfläche, gebildet durch die Ausnehmung und die Dichtung, befindet. Ausführungsbeispiele können daher eine Reibscheibenkomponente vorsehen, die eine Beschichtung umfasst, die eine Reibkraft zwischen der Reibscheibenkomponente und dem Bauteil erhöht und die Ausnehmung an die Beschichtung grenzt.

In Ausführungsbeispielen kann als Befestigungsmöglichkeit auch ein Flansch an der Reibscheibenkomponente, z.B. an deren axialen oder radialen Ende, vorgesehen sein. Dieser kann ebenfalls aus mehreren Segmenten zusammengesetzt sein, die jeweils untereinander gleich oder unterschiedlich sein können. In Ausführungsbeispielen können beispielsweise Reibscheibensegmente entsprechende Flanschsegmente aufweisen. Wenn im Folgenden der Flansch beschrieben wird, kann dieser daher ebenfalls einstückig bzw. einteilig, oder mehrstückig bzw. mehrteilig, d.h. aus Flanschsegmenten zusammengesetzt, ausgebildet sein. Dieser Flansch dient z. B. zur Befestigung der Reibscheibenkomponente an der Antriebswelle. In Ausführungsbeispielen kann die Reibscheibenkomponente mit dem Flansch einstückig ausgebildet sein. In anderen Ausführungsbeispielen können Reibscheibenkomponente und Flansch auch mehrstückig ausgebildet sein.

Durch die mechanische Trennung der Komponenten eines Unterwasserkraftwerks kann sich die Wartung erheblich erleichtern. Bei Wartungsarbeiten an Lagern oder der Welle muss nicht mehr die ganze Antriebswelle, bzw. der ganze Antriebsstrang gewechselt werden, sondern Antriebswelle und Lager können nach der mechanischen Entkopplung auch getrennt voneinander entnommen und gewartet werden. Dieser Vorteil wächst mit der Anzahl der mechanisch entkoppelten Komponenten. In anderen Worten kann die Antriebswelle über mehrere entkoppelte bzw. angeflanschte Lager gelagert werden, wobei sich der Wartungsaufwand aufgrund der Möglichkeit der getrennten Handhabung für jedes entkoppelte Lager reduziert. Darüber hinaus kann der Wartungsaufwand durch die reibkrafterhöhende Beschichtung der sich zwischen den Komponenten befindenden Reibscheibenkomponenten weiter gesenkt werden, da die Befestigungsmittel, z.B. für die Befestigung des Lagers an der Antriebswelle, und damit Montage- und Wartungszeiten reduziert oder minimiert werden können. An einer Hohlwelle vorgesehene Ventile können darüber hinaus auch ermöglichen, diese nach der Montage mit Luft oder Gas zu befüllen. Diese über entsprechend vorgesehene Ausnehmungen an den Reibscheibenkomponenten gegeneinander entsprechend abgedichtet werden.

Ferner können Ausführungsbeispiele auch ein Unterwasserkraftwerk mit einer Reibscheibenkomponente und einer Antriebswelle gemäß der obigen Beschreibung umfassen, wobei die Reibscheibenkomponente mit der Antriebwelle zumindest wasserdicht verbunden ist. Ausführungsbeispiele von Unterwasserkraftwerken und deren Komponenten können an den Einsatz unter Wasser generell angepasst sein. Beispielsweise können Ausführungsbeispiele für den Einsatz in Ozeanen, in Flüssen, Schleusen, Sperrwerken, etc. angepasst sein, d.h. allgemein für den Einsatz in Salz- und Süßwasser. Darüber hinaus können Ausführungsbeispiele für verschiedene Tiefen, variablen Wasserdruck, Temperaturen usw. ausgelegt sein.

In einem Ausführungsbeispiel kann die Bearbeitung der nun kleineren Bauteile, d.h. Lager und Antriebswelle, getrennt voneinander ermöglicht werden. Dadurch können kleinere Fertigungsanlagen genutzt werden, was die Fertigungskosten weiter reduzieren kann. Darüber hinaus kann die Fertigungspräzision erhöht werden und die Lager können separat individuell beschichtet werden. Dadurch ergeben sich auch hinsichtlich der Beschichtung weitere Möglichkeiten, wie z.B. Tauchen/Badbehandlung, da eine direkte Beschichtung auf der Wellenoberfläche nicht mehr notwendig ist. Auch kommt es nicht mehr zu Verzug durch Schweißen und es sind keine Reinigungsarbeiten notwendig, die bei konventionellen Konzepten nach dem Verschweißen anfielen. Durch die vorgesehenen Ausnehmungen können bei der Montage Dichtungen verwendet werden, die ein völliges Abdichten der Komponenten über die Reibscheibenkomponenten untereinander ermöglichen.

Das komplexe konventionelle System kann somit durch Ausführungsbeispiele in mehrere vereinfachte Teilsysteme zerlegt werden. Die einzelnen Teilsysteme können aufwandsgünstiger bearbeitet werden, bzw. können diese erst aufgrund der Zerlegung bestimmten Prozess- oder Bearbeitungsschritten zugänglich gemacht werden. Dies kann eine bessere Anpassung bzw. Optimierung der Prozesse an die Teilsysteme und damit eine Kostenreduktion ermöglichen. Stillstandszeiten der Anlage können reduziert werden, insbesondere dadurch, dass nunmehr Lagerwechsel vor Ort möglich sind. Auch wird durch Ausführungsbeispiele eine Lageraufbereitung ohne großen Logistikaufwand möglich. Auch dadurch kann eine Kostenreduktion bei Herstellung - Montage und Wartung erzielt werden. In Ausführungsbeispielen können Lager separat bearbeitet werden, dadurch werden tribologisch günstigere Oberflächengestaltungen möglich, beispielsweise ein Einbringen von anwendungsgerechten Schmiernuten und Bohrungen wird erleichtert und nicht zuletzt auch das Vorsehen von Ausnehmungen für die Dichtungen. Darüber hinaus können Schmierstoffleitungen und Zuführsysteme für Schmierstoffe leichter in das System eingebracht werden, wodurch sich letztendlich wiederum der Wartungsaufwand und damit die Betriebskosten senken lassen können.

Durch die Reibscheibenkomponente kann der Befestigungsaufwand der einzelnen Kraftwerkskomponenten reduziert werden. Die Befestigungsmittel können entsprechend reduziert werden, wenn die Reibung zwischen den Komponenten entsprechend vergrößert werden kann. Entsprechend weniger Befestigungsmittel, wie Schrauben, Nieten, etc. sind notwendig, um eine sichere Befestigung zu gewährleisten. Ausführungsbeispiele können daher eine Beschichtung der Reibscheibenkomponente derart vorsehen, dass sich ein Kraftschluss zu dem jeweiligen Bauteil, wie z.B. der Antriebswelle, erhöht. Die Beschichtung kann verschiedene Eigenschaften besitzen wie z.B. einen extrem großen Reibkoeffizienten. Die Gegenseite kann ebenfalls beschichtet werden, d.h. in Ausführungsbeispielen können sowohl die Reibscheibenkomponente als auch das Bauteil, z.B. eine Antriebswelle, beschichtet sein. Die Ausnehmungen für die Dichtung können dabei auch innerhalb der Beschichtung liegen, in manchen Ausführungsbeispielen können sich die Ausnehmungen auch nur auf die Beschichtung beziehen, d.h. eine Ausnehmung kann auch durch eine Unterbrechung der Beschichtung realisiert sein.

Die Segmente können in Ausführungsbeispielen so auf beispielsweise eine Welle montiert werden, dass die Seite mit der Reibbeschichtung auf der Stirnseite der Antriebswelle bzw. auf der Wellenschulter und/oder auf der Wellenachse liegt. Die Befestigung kann z.B. mittels Schrauben, Bolzen, Stiften, Nieten, Kleben, Stecken, etc. erfolgen. Durch die Reibbeschichtung kann der Widerstand der Segmente gegen ein Mitdrehen bzw. Mitwandern in Umfangsrichtung stark erhöht werden. Dies kann in Ausführungsbeispielen zur Folge haben, dass wesentlich weniger Befestigungselemente für die Anbringung der Segmentstücke an der Wellenschulter erforderlich sind. Dadurch wird auch die Welle selbst weniger stark geschwächt. Gleichzeitig können auch die Ausnehmungen für die Dichtung an der Stirnseite der Antriebswelle vorgesehen sein, z.B. so, dass sich eine Ausnehmung an der Antriebswelle mit einer Ausnehmung an der Reibscheibenkomponente überdeckt. In dem so entstehenden Hohlraum kann eine Dichtung derart vorgesehen werden, dass diese zwischen den Ausnehmungen verklemmt und so eine zuverlässige Abdichtung gewährleistet.

In Ausführungsbeispielen kann die Reibscheibenkomponente beispielsweise zwischen die Stirnseiten der Flanschpartner, z.B. Radiallager, Welle, Rotor, Generator, Turbine, eingelegt werden. Das Eindringen von Wasser in bzw. das Austreten eines Gases aus einer Hohlwelle kann durch eine Dichtung verhindert werden, die in der Reibscheibenkomponente und zwischen die einzelnen Reibscheiben-Segmente integriert werden kann. Als Dichtung kann beispielsweise ein Runddichtring, eine Dichtschnur, ein Klebe-Dichtstoff (stoffschlüssig, Kleber, Kitt, Elastomer), eine Spezialdichtung, eine Metallverbunddichtung, eine Textildichtung, eine aufblasbare Dichtung, eine Flachdichtung, eine Profildichtung, eine Muffendichtung, etc. eingesetzt werden. Diese Dichtungen können aus verschiedenen Materialen und aus unterschiedlichen Formen bestehen. Der Einbau der Dichtung kann radial, axial oder auch in Kombination radial und axial realisiert werden.

In Ausführungsbeispielen kann durch die Reibbeschichtung auf der Reibscheibe eine Reduzierung der Befestigungsschrauben/des Befestigungsmaterials ermöglicht werden. Daraus kann eine Erhöhung des übertragbaren Drehmomentes folgen bzw. eine Reduzierung des Flanschdurchmesser und der Befestigungsmittel. In Ausführungsbeispielen kann durch die Abdichtung das Eindringen von Flüssigkeit in einen Hohlraum bzw. das Entweichen von Gasen aus dem Hohlraum, z.B. einer Hohlwelle, vermieden werden. Ebenso kann eine solche Hohlwelle eine Gasfüllung besitzen die eine Entlastung der Welle und Lager darstellt. Ausführungsbeispiele könne so eine kompakte Bauweise durch Kombination von Reibbeschichtung und Dichtung ermöglichen.

Ausführungsbeispiele der vorliegenden Erfindung werden im Folgenden anhand der beiliegenden Figuren im Detail erläutert. Es zeigen
Figuren 1a ein Ausführungsbeispiel einer Anordnung von Reibscheibenkomponenten;
Figuren 1b einen Ausschnitt eines Ausführungsbeispiels einer Reibscheibenkomponente;
Figur 2a ein weiteres Ausführungsbeispiel einer Reibscheibenkomponente;
Figur 2b ein Ausführungsbeispiel von Reibscheibenkomponenten mit einer Dichtschnur; und
Figur 3 ein konventionelles Unterwasserkraftwerk.

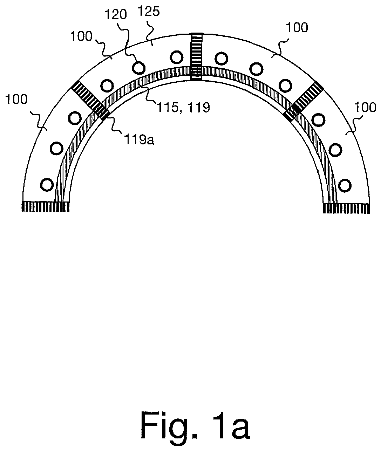

Die Figur 1a zeigt eine Anordnung mehrerer Ausführungsbeispiele von Reibscheibenkomponenten 100. In dem Ausführungsbeispiel der Figur 1a ist die obere Hälfte einer Reibscheibe gezeigt, die sich aus vier gleichen Reibscheibenkomponenten 100, die als Segmente ausgeführt sind, zusammensetzt. Aus Gründen der Übersichtlichkeit sind die strukturellen Ausgestaltungen an nur einer Reibscheibenkomponente mit Bezugszeichen versehen. Die Reibscheibenkomponente umfasst eine Befestigungsmöglichkeit 120 zur Verbindung zweier Bauelemente, die im vorliegenden Ausführungsbeispiel als Bohrungen 120 realisiert sind. Darüber hinaus ist die in der Figur 1a gezeigte Vorderseite (Stirnseite in der Zeichenebene) der Reibscheibenkomponente 100 mit einer Beschichtung 125 versehen, die eine Reibkraft zwischen der Reibscheibenkomponente 100 und zumindest einem der Bauelemente erhöht. Die Reibscheibenkomponente 100 umfasst darüber hinaus eine Ausnehmung 115 für eine Dichtung 119, derart dass die Reibscheibenkomponente 100 mit zumindest einem der Bauelemente wasserdicht verbindbar ist.

Wie die Figur 1a zeigt, kann sich die Ausnehmung 115 auch in oder an einem Flansch befinden, der entsprechend mit einer Gegenfläche an dem Bauelement zusammenwirkt. Ferner zeigt die Figur 1a eine weitere Dichtung 119a, mit der die Reibscheibensegmente 100 untereinander abgedichtet sind. Die Abdichtung kann in einigen Ausführungsbeispielen gas- oder luftdicht sein. Das Reibscheibensegment 100 weist an zumindest einer Seite eine zusätzliche Ausnehmung zur Aufnahme der Dichtung 119a zur Abdichtung des Reibscheibensegments 100 gegenüber einem weiteren Reibscheibensegment 100 auf.

Die Befestigungsmöglichkeit 120 kann beispielsweise Befestigungsmittel, wie z.B. Bohrungen, Gewinde, Schweißbolzen, Schweißmuttern, Schrauben, Stege oder Nuten, Klemmen, etc. umfassen. Unter einem Flansch sei hier ein Steg, eine Nase, eine Feder, ein Fortsatz o.ä. verstanden, der zur Befestigung an einem anderen Bauelement dient. Das jeweilige andere Bauelement kann dabei ebenfalls Befestigungsmittel oder Befestigungsmöglichkeiten wie Bohrungen, Gewinde, Schrauben, Schweißbolzen, Stege oder Nuten, Klemmen etc. aufweisen. Darüber hinaus kann der Flansch in Ausführungsbeispielen Nuten, Stege, oder eine Verzahnung aufweisen, um beispielsweise einen sicheren Eingriff an einer Antriebswelle und eine gegen ein Verdrehen gesicherte Verbindung mit der Antriebswelle zu erreichen. Die Antriebswelle kann in Ausführungsbeispielen entsprechend ausgebildet sein.

Die Figur 1a illustriert dabei ein Ausführungsbeispiel, bei dem die Reibscheibenkomponenten als Reibscheibenringsegmente ausgeführt sind. Generell kann eine Reibscheibenkomponente 100 auch als Reibscheibensegment, Reibscheibe, oder Reibscheibenring ausgebildet sein.

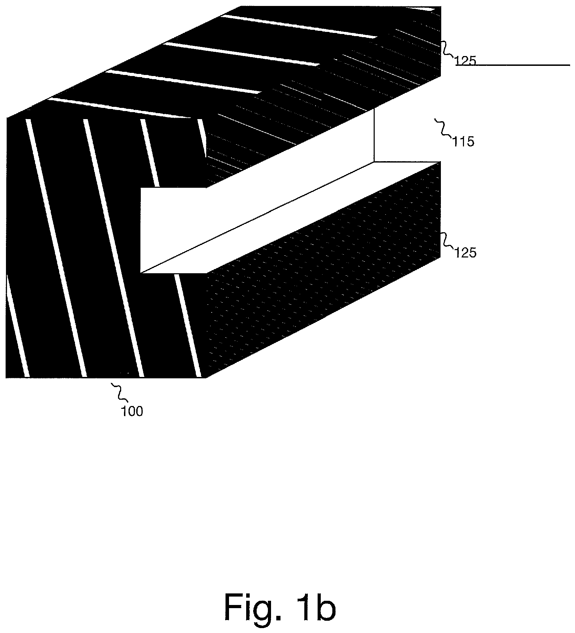

Zur näheren Verdeutlichung der strukturellen Ausgestaltung dieses Ausführungsbeispiels zeigt die Figur 1b einen Ausschnitt aus des Reibscheibenringsegmentes 100 der Figur 1a. Die Figur 1b zeigt die Ausnehmung 115, die an die Beschichtung oder den Reibbelag 125 grenzt und die als Nut 115 für die Dichtung 119 ausgeführt ist. In der Ausnehmung 115 befindet sich, wie in der Figur 1a gezeigt, im montierten Zustand eine Dichtung 119. Die Reibscheibenkomponente 100 kann dann zur Befestigung einer Antriebswelle eines Unterwasserkraftwerks an eine weitere Antriebswelle, eine Lagerkomponente, eine Rotorwelle, oder eine Generatorwelle eingesetzt werden. Die Ausnehmung 115 für die Dichtung 119 ist angepasst, um bei Befestigung an einer Hohlwelle als Antriebswelle, den Hohlraum der Antriebswelle abzudichten.

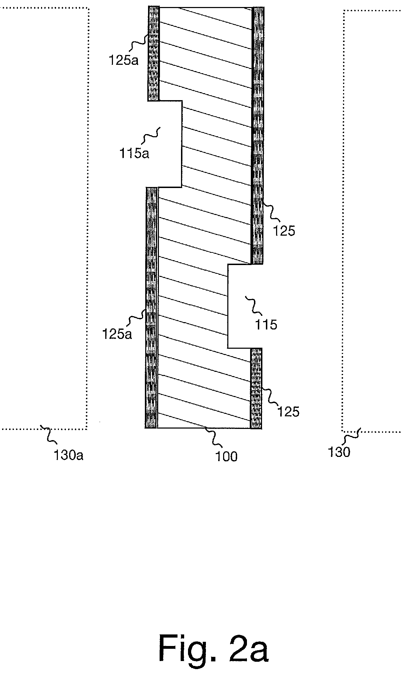

Die Figur 2a illustriert ein weiteres Ausführungsbeispiel einer Reibscheibenkomponente 100, mit der Beschichtung 125 und der Ausnehmung 115. Die Reibscheibenkomponente 100 weist eine weitere Ausnehmung 115a für eine weitere Dichtung auf, derart dass die Reibscheibenkomponente 100 mit beiden Bauelementen wasserdicht verbindbar ist. Die Figur 2a verdeutlicht, wie die Reibscheibenkomponente zwischen zwei Bauelemente 130, 130a geklemmt werden kann, um so gegenüber beiden Bauelementen 130, 130a die Reibkraft über die Beschichtungen 125, 125a zu erhöhen und jeweils zumindest wasserdichte Kopplungen bereitzustellen. In der Figur 2a ist ferner zu erkennen, dass sich die Ausnehmung 115 und die weitere Ausnehmung 115a an axial gegenüberliegenden Seiten der Reibscheibenkomponente 100 befinden und die Reibscheibenkomponente Beschichtungen 125, 125a an zwei sich axial gegenüberliegenden Seiten aufweist.

Die Reibscheibenkomponente 100 kann mit dem Bauelement 130, 130a gas- oder luftdicht verbindbar sein, d.h. die Verbindung kann derart abgedichtet werden, dass auch ein unter Druck stehendes Gas nicht entweicht. Darüber hinaus kann die Abdichtung derart ausgebildet sein, dass selbst wenn sich z.B. im Innern einer mit der Reibscheibenkomponente abgedichteten Hohlwelle ein Vakuum befindet und die ganze Anordnung sich unter Wasser befindet, kein Wasser ins Innere der Anordnung dringen kann. Der Wasserdruck kann dabei, gerade in größeren Tiefen, erheblich sein. Der Wasserdruck erhöht sich um etwa je 1bar pro 10m Wassertiefe. Die Abdichtung kann in Ausführungsbeispielen ausgebildet sein, um einem Wasserdruck von 1bar, 5bar, 10bar, 20bar, 50bar, 100bar, 200bar, 500bar oder 1000bar standzuhalten.

Es sei darauf hingewiesen, dass die Beschichtung 125, 125a in der Figur 2a zweiseitig dargestellt ist, Ausführungsbeispiele können aber ebenfalls einseitige Beschichtungen umfassen. Darüber hinaus ist die Beschichtung 125, 125a in den Figuren der Übersichtlichkeit halber lokal begrenzt dargestellt. In Ausführungsbeispielen kann die Beschichtung auch größere Flächen wie z.B. ganze Seitenflächen oder Oberflächen umfassen.

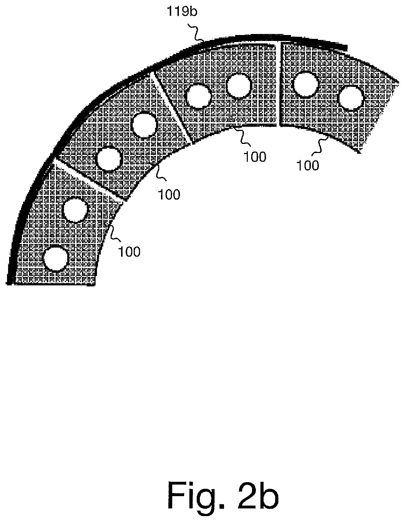

Die Figur 2b illustriert ein Ausführungsbeispiel mit Reibscheibensegmenten 100, die nach außen hin mit einer Dichtschnur 119b abgedichtet sind. Wie in der Figur 2b zu erkennen ist, verläuft die Dichtschur 119b in diesem Ausführungsbeispiel entlang des Umfangs des Reibscheibenrings, der aus den Reibscheibensegmenten 100 gebildet ist.

In Ausführungsbeispielen können als Dichtungen 119, 119a, 119b beispielsweise Runddichtringe, Dichtschnüre, Klebe-Dichtstoffe, Kleber, Kitte, Elastomere, Spezialdichtungen, Metallverbunddichtungen, Textildichtungen, aufblasbare Dichtungen, Flachdichtungen, Profildichtungen, Muffendichtungen, etc. eingesetzt werden. Diese Dichtungen können aus verschiedenen Materialen und aus unterschiedlichen Formen bestehen. Der Einbau der Dichtungen kann radial, axial oder auch in Kombination radial und axial realisiert werden.

Die Reibscheibenkomponente 100 kann in Ausführungsbeispielen einem Teil einer Reibscheibe oder eines Reibscheibenrings mit einem Außendurchmesser von beispielsweise 2200 mm entsprechen. Generell kann der Außendurchmesser (doppelter Außenradius) auch größer gleich 40, 60, 100, 1000, 2000, 3000, 4000, 6000 oder 10000 mm sein. In einem Ausführungsbeispiel als Reibscheibenring umfasst der Innendurchmesser (der doppelte Innenradius) des Reibscheibenrings etwa 1800 mm. In Ausführungsbeispielen kann der Innendurchmesser (doppelter Innenradius) des Reibscheibenrings auch größer gleich 20, 30, 50, 500, 1000, 1500, 2000, 3000, 5000 oder 10000 mm sein.

Die Beschichtung 125, 125a kann in Ausführungsbeispielen ein anderes Material als die Bauelemente 130, 130a umfassen. In Ausführungsbeispielen kann die Beschichtung 125, 125a Nickel, Wolfram, Kobalt, Chrom, Aluminium, Diamant oder einen keramischen Werkstoff umfassen. Die Beschichtung 125, 125a kann generell Partikel mit einer Mohshärte größer gleich 9 aufweisen.

In Ausführungsbeispielen können die Reibscheibenkomponente 100, die Bauelemente 130, 130a oder die Antriebswelle 130 einen metallischen, einen keramischen oder einen Mischwerkstoff bzw. einen teilkeramischen Werkstoff umfassen. Die Beschichtung 125 dient dazu, eine Reibkraft und damit den Kraftschluss zu den Bauelementen zu erhöhen. Die Reibbeschichtung 125 kann dabei als Hauptbestandteil ein hochfestes, zähes und hartes Metall aufweisen, wobei die Beschichtung 125, 125a in wenigstens einem Oberflächenbereich mit einer quadratähnlichen Grundfläche mit einer Seitenlänge im Bereich um einen Millimeter herum, durch ein Profil mit vielen spitzen Bergen und Tälern gekennzeichnet sein kann. In diesem Oberflächenbereich kann ein Anteil derjenigen Berge und Täler, die eine zur Grundfläche planparallele Ebene überragen, die vom höchsten Berg einen Abstand im Bereich zwischen 15 und 30 pm aufweist, größer als etwa 20% sein.

Die Topographie der Reibbeschichtung 125, insbesondere bei Ausbildung der Beschichtung als flammgespritzte Molybdänbeschichtung, kann einen hohen Flächentraganteil, beispielsweise größer 20%, sowie große Haftreibungszahlen, beispielsweise größer 0,6 oder sogar größer 0,65 bezogen auf eine Paarung besagter Beschichtung mit einem stählernen Gegenstück, bzw. mit der Stirnseite der Antriebswelle, der Wellenspurscheibe oder der Wellenschulter, aufweisen. In Ausführungsbeispielen kann die Reibbeschichtung 125 Partikel mit einer Mohshärte größer gleich 9 und/oder einer vorgebbaren mittleren Korngröße aufweisen. In Ausführungsbeispielen können aber auch Partikel mit einer Mohshärte größer gleich 6, 7 oder 8 vorkommen. Ferner kann die Beschichtung eine Dicke in etwa entsprechend der halben mittleren Korngröße aufweisen. Der Beschichtungsträger, d.h. die unbeschichtete Reibscheibenkomponente 100, kann eine Vertiefungen umfassende Oberfläche aufweisen. Ein Anteil von ca. 85% oder mehr der Vertiefungen kann gegenüber einer die jeweilige Vertiefung umgebenden Oberflächenumgebung mit einer Tiefe kleiner ca. 10% und/oder einer Öffnungsweite kleiner gleich ca. 15% der Beschichtungsdicke ausgebildet sein. Die Beschichtung 125 kann auf der Oberfläche des Beschichtungsträgers aufgebracht sein und die Partikel wenigstens in einem unteren, zum Beschichtungsträger hin orientierten Bereich, umschließen.

Die Oberfläche des Beschichtungsträgers, kann demnach derart ausgebildet sein, dass die furchenartigen Vertiefungen gegenüber einer die jeweilige Vertiefung umgebenden Oberflächenumgebung, eine Tiefe kleiner ca. 10% der Beschichtungsdicke und/oder einer Öffnungsweite kleiner ca. 15% der Beschichtungsdicke aufweisen. So kann eine optimale Haftung für die Beschichtung 125 sichergestellt und gleichzeitig verhindert werden, dass Partikel derart in Vertiefungen verschwinden, dass sie nicht zur Reibungserhöhung der Beschichtungsanordnung beitragen.

Die Reibbeschichtung 125 kann beispielsweise Nickel, Wolfram, Kobalt, Chrom, Aluminium, Diamant oder einen keramischen Werkstoff aufweisen. Die Beschichtung 125 kann beispielsweise aus galvanisch aufgebrachtem Nickel gebildet werden, so dass für den Beschichtungsträger gleichzeitig eine Schutzschicht gegen Korrosion verursachende und andere Umwelteinflüsse erzeugt wird.

Darüber hinaus kann die Beschichtung 125, 125a Hartpartikel, insbesondere Partikel mit dem Härtegrad von Diamant oder kubischem Bor-Nitrat (CBN) oder von Korund oder Carbid, aufweisen. Die Beschichtungen 125, 125a können sich dadurch auszeichnen, dass sie als reibwerterhöhende Beschichtungen die lösbare Verbindung zwischen den Bauteilen verbessern.

In Ausführungsbeispielen kann die Beschichtung 125, 125a Zinksilicat umfassen oder die Partikel können z.B. durch Spritzverzinken oder dergleichen entsprechend mit einer reibwerterhöhenden Beschichtung ausgebildet sein. Dadurch, dass die Verbindung spritzverzinkt ist, kann ebenfalls eine zuverlässige, reibwerterhöhende Beschichtung bereitgestellt werden.

In Ausführungsbeispielen können als Partikel Hartpartikel, wie z.B. Diamant verwendet werden, wobei die Partikelgröße größer als 30 pm, vorzugsweise mehr als 35 pm betragen kann. Z.B. kann eine Beschichtung 125 galvanisch auf Nickelbasis zur Diamantbeschichtung mit einer mittleren Partikelgröße von 46 pm (Diamant D46) erzeugt werden.

In Ausführungsbeispielen mit einseitiger Beschichtung 125, 125a, d.h. nur auf der Seite der Reibscheibenkomponente 100 und nicht auf der Seite des Bauelements, kann das Material der Reibscheibenkomponente mit einer größeren Mohshärte und/oder einer größeren Zugfestigkeit gewählt werden als das Material der Bauelemente 130, 130a. Daher können sich die über die Beschichtung 125, 125a hinausragenden Bereiche der Partikel in das Bauelement eindrücken und so die Reibung erhöhen. Die Beschichtung 125 unterhalb der Partikel sowie die Bereiche des Beschichtungsträgers unterhalb der Partikel können gegenüber dem Eindrücken in das Gegenelement/Bauelement nur geringfügig verformt werden. In beidseitig beschichteten Ausführungsbeispielen können auch insbesondere eine harte Beschichtung mit den o.g. Eigenschaften und eine weichere Beschichtung, die gerade zum Aufnehmen oder sich Eindrücken der Partikel vorgesehen ist, vorliegen.

In Ausführungsbeispielen können als Reibbeschichtung 125, 125a Partikel in einer oder wenigen Lagen aufgetragen werden, mit einem sich daran anschließenden Fixieren der Partikel durch ein galvanisch aufgebrachtes Metall, insbesondere Nickel, so dass eine Partikellage fixiert wird, wobei beim Auftragen mehrerer Lagen die überschüssigen Lagen beispielsweise durch ein Bürsten nach dem Fixieren entfernt werden können. Beispielsweise ist eine Beschichtung 125 denkbar, bei der aus der Nickelschicht herausragende Partikelbereiche über 25%, oder bis 40% der Oberfläche der Beschichtung ausmachen, womit letztendlich sehr hohe Haftreibungszahlen von größer 0,7 und auch über 0,8 erzielbar sind. Dabei ist unter einlagig zu verstehen, dass bei einem überwiegenden Anteil der beschichteten Oberfläche, insbesondere größer 75%, tatsächlich nur eine Lage von Partikeln fixiert wird, und lediglich in kleineren Teilbereichen der beschichteten Oberfläche die Partikel auch mehrlagig, insbesondere zweilagig anhaften können.

Als Beschichtungsverfahren sind z.B. thermoplastisches Polymerbeschichten, Nanobeschichten, Plasmabeschichten, Karbidbeschichten, PVD, CVD (Beschichten durch chemisches Gasphasenabscheiden, von engl. chemical vapour depostion), Beschichten mit TiC, TiCN, TiN, AlTiN, DLC (Beschichten mit diamantähnlichem Kohlenstoff, von engl. diamond-like carbon), HVOF, etc., denkbar.

## Patentansprüche

1. Eine Reibscheibenkomponente (100), die ein Befestigungsmittel (120) zur Verbindung zweier Bauelemente (130; 130a) umfasst, wobei die Reibscheibenkomponente (100) eine Beschichtung (125) aufweist, die eine Reibkraft zwischen der Reibscheibenkomponente (100) und zumindest einem der Bauelemente (130; 130a), in montiertem Zustand, erhöht, und ferner eine Ausnehmung (115) für eine Dichtung (119) aufweist, derart dass die Reibscheibenkomponente (100) mit zumindest einem der Bauelemente (130; 130a) wasserdicht verbindbar ist, wobei die Reibscheibenkomponente (100) als Reibscheibensegment (100) ausgeführt ist.

2. Die Reibscheibenkomponente (100) gemäß Anspruch 1, die als Reibscheibensegment, Reibscheibenringsegment, Reibscheibe, oder Reibscheibenring ausgebildet ist.

3. Die Reibscheibenkomponente (100) gemäß einem der vorangehenden Ansprüche, die mit dem zumindest einen der Bauelemente (130; 130a) gas- oder luftdicht verbindbar ist.

4. Die Reibscheibenkomponente (100) gemäß einem der vorangehenden Ansprüche, bei der die Ausnehmung (115) an die Beschichtung (125) grenzt.

5. Die Reibscheibenkomponente (100) gemäß einem der vorangehenden Ansprüche, die zur Befestigung einer Antriebswelle eines Unterwasserkraftwerks an eine weitere Antriebswelle, eine Lagerkomponente, eine Rotorwelle, oder eine Generatorwelle angepasst ist, wobei die Ausnehmung (115) für die Dichtung (119) angepasst ist, um bei Befestigung an einer Hohlwelle als Antriebswelle, den Hohlraum der Antriebswelle abzudichten.

6. Die Reibscheibenkomponente (100) gemäß einem der vorangehenden Ansprüche, die eine weitere Ausnehmung (115a) für eine weitere Dichtung aufweist, derart dass die Reibscheibenkomponente (100) mit beiden Bauelementen (130; 130a) wasserdicht verbindbar ist.

7. Die Reibscheibenkomponente (100) gemäß dem vorangehenden Anspruch, bei der sich die Ausnehmung (115) und die weitere Ausnehmung (115a) an axial gegenüberliegenden Seiten der Reibscheibenkomponente (100) befinden und die Reibscheibenkomponente Beschichtungen (125; 125a) an zwei sich axial gegenüberliegenden Seiten aufweist.

8. Die Reibscheibenkomponente (100) gemäß einem der vorangehenden Ansprüche, wobei das Reibscheibensegment (100) an zumindest einer Seite eine zusätzliche Ausnehmung zur Aufnahme einer Dichtung (119a) zur Abdichtung des Reibscheibensegments (100) gegenüber einem weiteren Reibscheibensegment (100) aufweist.

9. Eine Anordnung aus einer Antriebswelle (130) für ein Unterwasserkraftwerk, einer Reibscheibenkomponente gemäß einem der vorangehenden Ansprüche und einem mit der Antriebswelle (130) über die Reibscheibenkomponente verbundenen Bauelement (130; 130a).

10. Ein Unterwasserkraftwerk mit einer Anordnung gemäß Anspruch 9.

## Claims

1. Friction disc component (100) which comprises a fastening means (120) for connecting two structural elements (130; 130a), the friction disc component (100) having a coating (125) which increases a frictional force between the friction disc component (100) and at least one of the structural elements (130; 130a) in the assembled state, and having, furthermore, a recess (115) for a seal (119), in such a way that the friction disc component (100) can be connected in a water-tight manner to at least one of the structural elements (130; 130a), the friction disc component (100) being configured as a friction disc segment (100).

2. Friction disc component (100) according to Claim 1, which is configured as a friction disc segment, a friction disc ring segment, a friction disc, or a friction disc ring.

3. Friction disc component (100) according to either of the preceding claims, which can be connected in a gas-tight or air-tight manner to the at least one of the structural elements (130; 130a).

4. Friction disc component (100) according to one of the preceding claims, in which the recess (115) adjoins the coating (125).

5. Friction disc component (100) according to one of the preceding claims, which, for fastening a drive shaft of an underwater power plant, is adapted to a further drive shaft, a bearing component, a rotor shaft or a generator shaft, the recess (115) for the seal (119) being adapted, in order to seal the cavity of the drive shaft in the case of fastening to a hollow shaft as drive shaft.

6. Friction disc component (100) according to one of the preceding claims, which has a further recess (115a) for a further seal, in such a way that the friction disc component (100) can be connected in a water-tight manner to both structural elements (130; 130a).

7. Friction disc component (100) according to the preceding claim, in which the recess (115) and the further recess (115a) are situated on axially opposite sides of the friction disc component (100), and the friction disc component has coatings (125; 125a) on two axially opposite sides.

8. Friction disc component (100) according to one of the preceding claims, the friction disc segment (100) having, on at least one side, an additional recess for receiving a seal (119a) for sealing the friction disc segment (100) with respect to a further friction disc segment (100).

9. Arrangement comprising a drive shaft (130) for an underwater power plant, a friction disc component according to one of the preceding claims, and a structural element (130; 130a) which is connected to the drive shaft (130) via the friction disc component.

10. Underwater power plant having an arrangement according to Claim 9.

## Revendications

1. Elément de disque de friction (100), qui comprend un moyen de fixation (120) pour l'assemblage de deux éléments de construction (130; 130a), dans lequel l'élément de disque de friction (100) présente un revêtement (125), qui augmente, dans l'état monté, une force de friction entre l'élément de disque de friction (100) et au moins un des éléments de construction (130; 130a), et présente en outre un évidement (115) pour un joint (119), de telle manière que l'élément de disque de friction (100) puisse être assemblé de façon étanche à l'eau à un des éléments de construction (130; 130a), dans lequel l'élément de disque de friction (100) est réalisé en forme de segment de disque de friction (100).

2. Elément de disque de friction (100) selon la revendication 1, qui est réalisé en forme de segment de disque de friction, segment annulaire de disque de friction, disque de friction ou anneau de disque de friction.

3. Elément de disque de friction (100) selon l'une quelconque des revendications précédentes, qui peut être assemblé de façon étanche au gaz ou à l'air audit au moins un des éléments de construction (130; 130a).

4. Elément de disque de friction (100) selon l'une quelconque des revendications précédentes, dans lequel l'évidement (115) aboutit au revêtement (125).

5. Elément de disque de friction (100) selon l'une quelconque des revendications précédentes, qui est adapté pour la fixation d'un arbre de commande d'une centrale électrique sous-marine à un autre arbre de commande, à un élément de palier, à un arbre de rotor, ou à un arbre de générateur, dans lequel l'évidement (115) pour le joint (119) est adapté pour, dans le cas d'une fixation à un arbre creux comme arbre de commande, assurer l'étanchéité de la cavité de l'arbre de commande.

6. Elément de disque de friction (100) selon l'une quelconque des revendications précédentes, qui présente un autre évidement (115a) pour un autre joint, de telle manière que l'élément de disque de friction (100) puisse être assemblé de façon étanche à l'eau aux deux éléments de construction (130; 130a).

7. Elément de disque de friction (100) selon la revendication précédente, dans lequel l'évidement (115) et l'autre évidement (115a) se trouvent sur des côtés axialement opposés de l'élément de disque de friction (100) et l'élément de disque de friction présente des revêtements (125; 125a) sur deux côtés axialement opposés l'un à l'autre.

8. Elément de disque de friction (100) selon l'une quelconque des revendications précédentes, dans lequel le segment de disque de friction (100) présente sur au moins un côté un évidement supplémentaire destiné à recevoir un joint (119a) pour assurer l'étanchéité du segment de disque de friction (100) par rapport à un autre segment de disque de friction (100).

9. Agencement composé d'un arbre de commande (130) pour une centrale électrique sous-marine, d'un élément de disque de friction (100) selon l'une quelconque des revendications précédentes et d'un élément de construction (130; 130a) assemblé à l'arbre de commande (130) au moyen de l'élément de disque de friction.

10. Centrale électrique sous-marine comportant un agencement selon la revendication 9.
